(19) Europäisches Patentamt
European Patent Office
Office européen des brevets

(11) **EP 4 742 146 A1**

(12) **EUROPEAN PATENT APPLICATION**
published in accordance with Art. 153(4) EPC

(43) Date of publication:
**13.05.2026 Bulletin 2026/20**

(51) International Patent Classification (IPC):
***G06T 5/00*** (2024.01)

(21) Application number: **24848167.3**

(52) Cooperative Patent Classification (CPC):
**G06N 3/0464; G06N 3/048; G06N 3/08; G06T 5/00; G06T 5/50**

(22) Date of filing: **26.07.2024**

(86) International application number:
**PCT/CN2024/107782**

(87) International publication number:
**WO 2025/026210 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.07.2023 CN 202310950031**

(71) Applicant: **Huawei Technologies Co., Ltd.**
**Shenzhen, Guangdong 518129 (CN)**

(72) Inventors:
• **XUE, Shuchen**
**Shenzhen, Guangdong 518129 (CN)**
• **YI, Mingyang**
**Shenzhen, Guangdong 518129 (CN)**
• **LUO, Weijian**
**Shenzhen, Guangdong 518129 (CN)**
• **ZHANG, Shifeng**
**Shenzhen, Guangdong 518129 (CN)**
• **SUN, Jiacheng**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA PROCESSING METHOD AND APPARATUS**

(57) A data processing method is provided, and is applied to the field of artificial intelligence. The method includes: obtaining a plurality of first images and random noise, where different first images are denoised images predicted by using a denoising module in a diffusion model at different historical steps; and fusing the plurality of first images and the random noise, to obtain a denoised image at a current step. In this application, when a denoised image is predicted, denoised images that are predicted at different historical steps are fused, so that sampling error can be reduced under same calculation consumption, thereby reducing a quantity of sampling times.

Obtain a plurality of first images and random noise, where different first images are denoised images predicted by using a denoising module in a diffusion model at different historical steps — 501

Fuse the plurality of first images and the random noise, to obtain a denoised image at a current step — 502

FIG. 5

EP 4 742 146 A1

## Description

This application claims priority to Chinese Patent Application No. 202310950031.2, filed with the China National Intellectual Property Administration on July 28, 2023 and entitled "DATA PROCESSING METHOD AND APPARATUS THEREOF", which is incorporated herein by reference in its entirety.

## TECHNICAL FIELD

This application relates to the field of artificial intelligence, and in particular, to a data processing method and an apparatus thereof.

## BACKGROUND

Artificial intelligence (Artificial Intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and attempts to understand essence of intelligence and produce a new intelligent machine that can react in a manner similar to human intelligence. Artificial intelligence is to research design principles and implementation methods of various intelligent machines, so that the machines have perception, inference, and decision-making functions.

A stable diffusion model (stable diffusion model, which may be referred to as a diffusion model for short) is a generative model, and is configured to generate high-fidelity multimedia data, such as an image, a voice, and a video. The diffusion model generates an image through a diffusion process. The model performs a plurality of diffusion and reverse diffusion operations on noise, to complete training and inference of the model. This makes the generation process of the diffusion model more stable and less prone to issues such as mode collapse.

The generative model is a model that generates new data approximately following target distribution by simulating data distribution. The diffusion model is among the best-performing generative models in recent years. It defines a forward Markov chain to gradually add noise to data, and then learns its reverse process to transform noise back into data.

To ensure that stationary distribution approximates noise distribution, the diffusion model requires a sufficient quantity of iterations T (typically, T=1000). An original sampling method of the diffusion model is equivalent to performing T-step reverse sampling of a Markov chain, which is highly time-consuming and hinders widespread application of the diffusion model in downstream tasks.

Therefore, a fast and high-quality sampling method for the diffusion model is urgently required.

## SUMMARY

This application provides a data processing method, to reduce sampling error under same calculation consumption, thereby reducing a quantity of sampling times.

According to a first aspect, this application provides a data processing method. The method includes: obtaining a plurality of first images and random noise, where different first images are denoised images predicted by using a denoising module in a diffusion model at different historical steps; and fusing the plurality of first images and the random noise, to obtain a denoised image at a current step.

In this application, when a denoised image is predicted, denoised images that are predicted at different historical steps are fused, so that sampling error can be reduced under same calculation consumption, thereby reducing a quantity of sampling times.

In a possible implementation, the method further includes: determining a first weight corresponding to each historical step, where each first weight is related to a value obtained by mapping the historical step using a target mapping method, and the target mapping method is used to determine a magnitude of randomness at each step; and fusing the plurality of first images and the random noise includes: fusing the plurality of first images and the random noise based on a plurality of first weights.

In this embodiment of this application, a variance control function $\tau(t)$ may be applied to better control randomness in a sampling process. In comparison with a deterministic sampling method, randomness is introduced to improve sampling quality, and in comparison with an existing random sampling method, randomness in a sampling process is controllable.

In a possible implementation, each first weight is specifically obtained by performing a stochastic Adams method on the value obtained by mapping the historical step using the target mapping method.

By using the stochastic Adams method, problems of low efficiency and slow convergence of numerical schemes used in the existing technologies can be overcome.

In a possible implementation, the method further includes: determining a second weight corresponding to the random noise, where the second weight is related to the value obtained by mapping the historical step using the target mapping method, and the target mapping method is used to determine the magnitude of randomness at each step; and fusing the plurality of first images and the random noise includes: fusing the plurality of first images and the random noise based on the second weight.

In a possible implementation, fusing the plurality of first images and the random noise includes: fusing a denoised image obtained at a latest step, the plurality of first images, and the random noise.

In a possible implementation, the method further includes: determining a third weight corresponding to the denoised image obtained at the latest step, where the third weight is related to a value obtained by mapping the latest step using the target mapping method, and the target mapping method is used to determine the magnitude of randomness at each step; and fusing the denoised image obtained at the latest step, the plurality of first images, and the random noise includes: fusing the denoised image obtained at the latest step, the plurality of first images, and the random noise based on the third weight.

In this embodiment of this application, a next state (that is, a denoised image at a current step) is obtained by summing a linear combination of model outputs from several previous steps, linear scaling of a previous state, and Gaussian noise having an analytical variance.

In a possible implementation, the target mapping method is a piecewise constant function.

In a possible implementation, the random noise is Gaussian random noise.

In a possible implementation, fusing the plurality of first images and the random noise, to obtain the denoised image at the current step includes: fusing the plurality of first images and the random noise, to obtain an initial value of the denoised image at the current step; processing the initial value by using a denoising module in the diffusion model, to obtain a processing result; and fusing the processing result, the plurality of first images, and the random noise, to obtain the denoised image at the current step.

In a possible implementation, the method further includes: determining a fourth weight corresponding to the processing result, where the fourth weight is related to a value obtained by mapping the current step using the target mapping method, and the target mapping method is used to determine the magnitude of randomness at each step; and fusing the processing result, the plurality of first images, and the random noise includes: fusing the processing result, the plurality of first images, and the random noise based on the fourth weight.

This is equivalent to correcting a result obtained by fusing the plurality of first images and the random noise, thereby improving prediction precision and consequently reducing a quantity of sampling times. By introducing a prediction correction method, sampling error is reduced under same calculation consumption.

According to a second aspect, this application provides a data processing apparatus. The apparatus includes:

an obtaining module, configured to obtain a plurality of first images and random noise, where different first images are denoised images predicted by using a denoising module in a diffusion model at different historical steps; and
a processing module, configured to fuse the plurality of first images and the random noise, to obtain a denoised image at a current step.

In a possible implementation, the processing module is further configured to:
determine a first weight corresponding to each historical step, where each first weight is related to a value obtained by mapping the historical step using a target mapping method, and the target mapping method is used to determine a magnitude of randomness at each step.

The processing module is specifically configured to:
fuse the plurality of first images and the random noise based on a plurality of first weights.

In a possible implementation, each first weight is specifically obtained by performing a stochastic Adams method on the value obtained by mapping the historical step using the target mapping method.

In a possible implementation, the processing module is further configured to:
determine a second weight corresponding to the random noise, where the second weight is related to the value obtained by mapping the historical step using the target mapping method, and the target mapping method is used to determine the magnitude of randomness at each step.

The processing module is specifically configured to:
fuse the plurality of first images and the random noise based on the second weight.

In a possible implementation, the processing module is specifically configured to:
fuse a denoised image obtained at a latest step, the plurality of first images, and the random noise.

In a possible implementation, the processing module is further configured to:
determine a third weight corresponding to the denoised image obtained at the latest step, where the third weight is related to a value obtained by mapping the latest step using the target mapping method, and the target mapping method is used to determine the magnitude of randomness at each step.

The processing module is specifically configured to:
fuse the denoised image obtained at the latest step, the plurality of first images, and the random noise based on the third weight.

In a possible implementation, the target mapping method is a piecewise constant function.

In a possible implementation, the random noise is Gaussian random noise.

In a possible implementation, the processing module is specifically configured to:

fuse the plurality of first images and the random noise, to obtain an initial value of the denoised image at the current step;

process the initial value by using a denoising module in the diffusion model, to obtain a processing result; and fuse the processing result, the plurality of first images, and the random noise, to obtain the denoised image at the current step.

In a possible implementation, the processing module is further configured to:
determine a fourth weight corresponding to the processing result, where the fourth weight is related to a value obtained by mapping the current step using the target mapping method, and the target mapping method is used to determine the magnitude of randomness at each step.

The processing module is specifically configured to:
fuse the processing result, the plurality of first images, and the random noise based on the fourth weight.

According to a third aspect, an embodiment of this application provides a data processing apparatus. The apparatus may include a memory, a processor, and a bus system. The memory is configured to store a program. The processor is configured to execute the program in the memory, to perform the method according to any one of the first aspect and the optional implementations of the first aspect.

According to a fourth aspect, an embodiment of this application provides a computer-readable storage medium. The computer-readable storage medium stores a computer program, and when the computer program is run on a computer, the computer is enabled to perform the method according to any one of the first aspect and the optional implementations of the first aspect.

According to a fifth aspect, an embodiment of this application provides a computer program. When the computer program is run on a computer, the computer is enabled to perform the method according to any one of the first aspect and the optional implementations of the first aspect.

According to a sixth aspect, this application provides a chip system. The chip system includes a processor configured to support a data processing apparatus in implementing functions in the foregoing aspects, for example, sending or processing data or information in the foregoing method. In a possible design, the chip system further includes a memory. The memory is configured to store program instructions and data that are necessary for an execution device or a training device. The chip system may include a chip, or may include a chip and another discrete component.

**BRIEF DESCRIPTION OF DRAWINGS**

FIG. 1A is a diagram of a structure of an artificial intelligence main framework;
FIG. 1B and FIG. 1C are diagrams of application system frameworks according to the present invention;
FIG. 1D is a diagram of an optional hardware structure of a terminal;
FIG. 2 is a diagram of a structure of a server;
FIG. 3 is a diagram of a system architecture according to this application;
FIG. 4A shows a procedure of a cloud service;
FIG. 4B is a diagram of an application scenario;
FIG. 4C is a diagram of a network structure;
FIG. 4D is a diagram of a network structure;
FIG. 4E is a diagram of a network structure;
FIG. 5 is a schematic flowchart of a data processing method according to an embodiment of this application;
FIG. 6 is a diagram of processing of a data processing method according to an embodiment of this application;
FIG. 7 is a diagram of processing of a data processing method according to an embodiment of this application;
FIG. 8 is a diagram of processing of a data processing method according to an embodiment of this application;
FIG. 9A is a diagram of processing of a data processing method according to an embodiment of this application;
FIG. 9B is a diagram of beneficial effects of an embodiment of this application;
FIG. 10 is a diagram of a structure of a data processing apparatus according to an embodiment of this application;

FIG. 11 is a diagram of a structure of an execution device according to an embodiment of this application;

FIG. 12 is a diagram of a structure of a training device according to an embodiment of this application; and

FIG. 13 is a diagram of a structure of a chip according to an embodiment of this application.

## DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of new scenarios, the technical solutions provided in embodiments of this application are also applicable to a similar technical problem.

In this specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants mean to cover a non-exclusive inclusion, so that a process, method, system, product, or device that includes a series of units is not necessarily limited to those units, but may include other units not expressly listed or inherent to such a process, method, product, or device.

Terms "substantially (substantially)", "about (about)", and similar terms are used in this specification as approximate terms rather than as degree terms, and are intended to take into account inherent deviations of measured values or calculated values that are known to those of ordinary skill in the art. In addition, when embodiments of the present invention are described, "may (may)" is used to mean "one or more possible embodiments". Terms "use (use)", "using (using)", and "used (used)" that are used in this specification may be considered to be synonymous with terms "utilize (utilize)", "utilizing (utilizing)", and "utilized (utilized)", respectively. In addition, the term "exemplary (exemplary)" is intended to indicate an instance or an example.

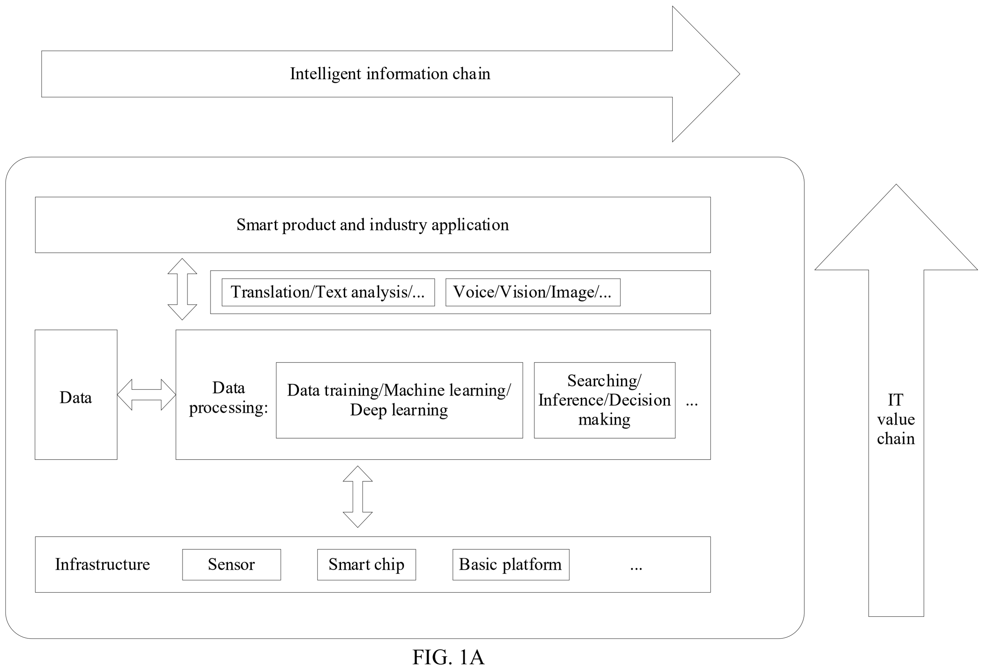

An overall working procedure of an artificial intelligence system is first described. FIG. 1A is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside through a sensor. A computing capability is provided by a smart chip (a hardware acceleration chip, for example, a CPU, an NPU, a GPU, an ASIC, or an FPGA). The basic platform includes related platform assurance and support such as a distributed computing framework and a network, and may include cloud storage and computing, an interconnected network, and the like. For example, the sensor communicates with the outside to obtain data, and the data is provided to a smart chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formalized intelligent information modeling, extraction, preprocessing, training, and the like on data.

Inference is a process in which human intelligent inference is simulated in a computer or an intelligent system, and machine thinking and problem resolving are performed by using formalized information according to an inference control policy. A typical function is searching and matching.

Decision making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include a smart terminal, smart transportation, smart health care, autonomous driving, a smart city, and the like.

This application may be applied to the natural language processing field in the artificial intelligence field. The following uses natural language processing as an example to describe a plurality of application scenarios implemented in products.

An application scenario of this application is first described. This application may be but is not limited to being applied to an application (which may be briefly referred to as a generative application below) having an image generation function, a natural language synthesis function, and an image classification or retrieval function, a cloud service provided by a cloud-side server, or the like. The following separately provides descriptions.

1. Generative application

A product form in embodiments of this application may be a generative application. The generative application may run on a terminal device or a cloud-side server.

In a possible implementation, the generative application may implement an image generation task to obtain a processing result.

For example, the generative application may implement at least an image generation task that is based on a diffusion method, but this is not limited thereto.

In a possible implementation, a user may open the generative application installed on the terminal device, and input image data and text data (a text may be triggered by using an instruction, and may not be actively input by the user). The generative application may process an image and the text by using a model obtained through training according to a method provided in embodiments of this application, or process an image and the text according to a method provided in embodiments of this application, and present a processing result to the user (a presentation manner may be but is not limited to displaying, playing, saving, or uploading to a cloud side).

In a possible implementation, a user may open the generative application installed on the terminal device, and input image data and text data. The generative application may send the image data and the text data to the cloud-side server. The cloud-side server processes an image or a text by using a model obtained through training according to a method provided in embodiments of this application, and returns a processing result to the terminal device. The terminal device may present the processing result to the user (a presentation manner may be but is not limited to displaying, playing, saving, or uploading to a cloud side).

For example, the image generation task may be specifically applied to, but not limited to, the following scenarios:

Scenario 1: Detection data generation in an autonomous driving scenario

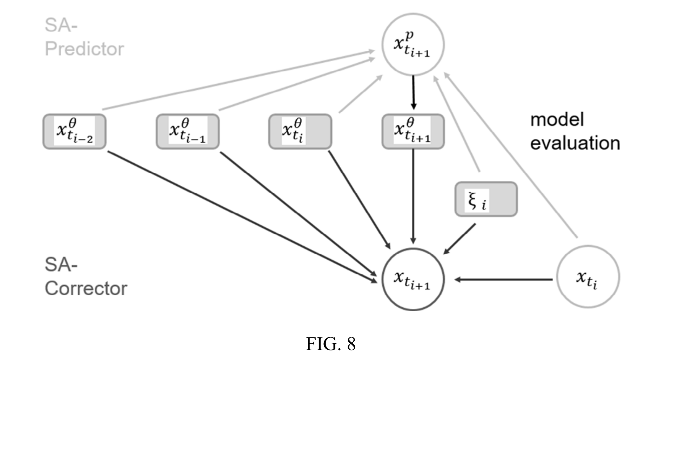

In a scenario of autonomous driving detection data generation, images with rich, real, and diversified traffic environments need to be generated. These images need to include various road types (such as city streets and highways), different weather conditions (such as sunny days, rainy days, and snowy days), a plurality of types of traffic participants (such as pedestrians, cyclists, cars, and trucks), and various traffic rules and signals (such as traffic lights, parking signs, and crosswalks). In addition, the generated images further need to consider various camera viewpoints and locations, to simulate a visual perception capability of an autonomous driving system under an actual road condition. As shown in FIG. 8, given a layout of an autonomous driving scenario in the lower left corner, a plurality of types of autonomous driving data with a same layout may be generated (as shown in the upper right corner of FIG. 8).

Scenario 2: Smartwatch face data generation

In a scenario of smartphone face data generation, diversified, personalized, and highly authentic watch face elements need to be generated based on a specific watch face layout. These watch face elements include hands (hour, minute, and second) and information such as a day-of-week display, a date display, a step count, heart rate monitoring, and a battery level. In addition, a generated watch face further needs to consider various design styles, color schemes, and fonts, to meet a personalized requirement and an aesthetic preference of a user.

Scenario 3: AI model generation in an e-commerce scenario

During AI model generation in the e-commerce scenario, diversified clothing combinations need to be generated based on input specified model styling, to be presented to potential consumers. First, a model needs to receive the model styling input by a user, for example, features such as a posture and a pose. Then, based on these features, a generation algorithm generates a series of clothing combinations that match the model styling. These combinations may include different types of tops, pants, skirts, jackets, shoes, and the like. In a generation process, the algorithm needs to consider styles, colors, patterns, and other details of clothing, and ensure that the generated combinations are visually attractive and authentic. In addition, to meet requirements of different consumers, the generated clothing combinations need be diversified, covering different styles, occasions, and seasons.

The following describes the generative application in embodiments of this application separately from perspectives of a functional architecture and a product architecture for implementing a function.

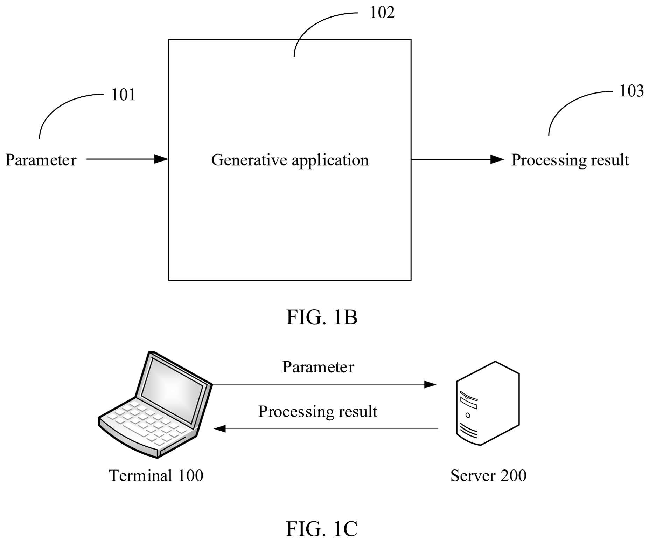

FIG. 1B is a diagram of a functional architecture of the generative application according to an embodiment of this application.

In a possible implementation, as shown in FIG. 1B, the generative application 102 may receive an input parameter 101 (for example, including an image or a text) and generate a processing result 103. The generative application 102 may be executed on (for example) at least one computer system, and include computer code. When the computer code is executed by one or more computers, the computer is enabled to execute a model obtained through training according to the method provided in embodiments of this application.

FIG. 1C is a diagram of an entity architecture for running the generative application according to an embodiment of this application.

FIG. 1C is a diagram of a system architecture. The system may include a terminal 100 and a server 200. The server 200 may include one or more servers (an example in which one server is included is used for description in FIG. 1C), and the server 200 may provide an image synthesis function or a natural language generation function for one or more terminals.

A generative application may be installed on the terminal 100, or a web page related to the image synthesis function or the natural language generation function may be opened on the terminal 100. The application or the web page may provide an interface. The terminal 100 may receive a related parameter input by a user on the interface of the image synthesis function or the natural language generation function, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter without a need to cooperate with the server. This is not limited in embodiments of this application.

The following describes a product form of the terminal 100 in FIG. 1C.

The terminal 100 in embodiments of this application may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

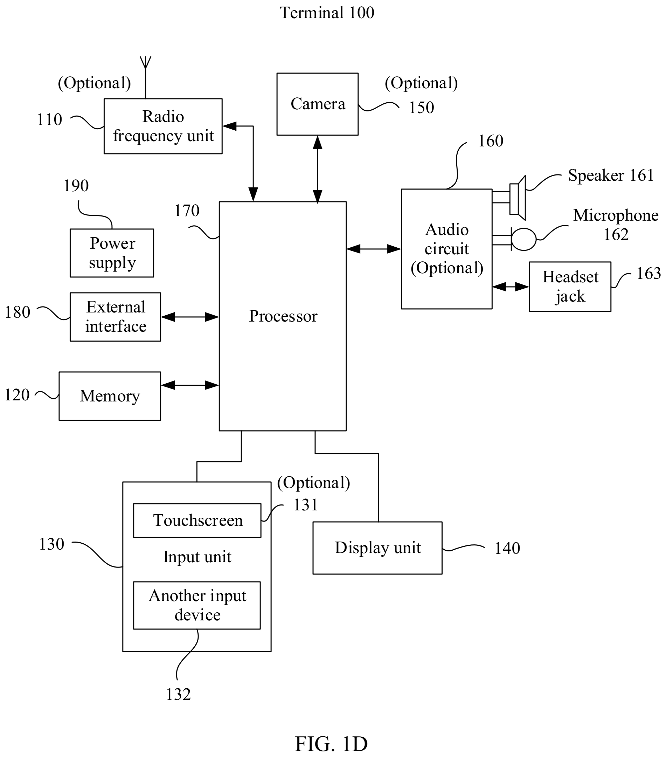

FIG. 1D is a diagram of an optional hardware structure of the terminal 100.

With reference to FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 1D is merely an example of the terminal or a multi-functional device and does not constitute a limitation on the terminal or the multi-functional device. The terminal or the multi-functional device may include more or fewer components than those shown in the figure, a combination of some components, or different components.

The input unit 130 may be configured to: receive input digital or character information, and generate a key signal input related to a user setting and function control of a portable multifunction apparatus. Specifically, the input unit 130 may include a touchscreen 131 (optional) and/or another input device 132. The touchscreen 131 may collect a touch operation performed by the user on or near the touchscreen 131 (for example, an operation performed by the user on or near the touchscreen by using any appropriate object such as a finger, a joint, or a stylus), and drive a corresponding connection apparatus based on a preset program. The touchscreen may detect a touch action performed by the user on the touchscreen, convert the touch action into a touch signal, and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared ray type, and a surface acoustic wave type. In addition to the touchscreen 131, the input unit 130 may include the another input device. Specifically, the another input device 132 may include but is not limited to one or more of a physical keyboard, a functional button (for example, a volume control button or an on/off button), a trackball, a mouse, a joystick, and the like.

The another input device 132 may receive input image data or text data.

The display unit 140 may be configured to display information input by the user, information provided for the user, various menus of the terminal 100, an interaction interface, a file, and/or playing of any multimedia file. In embodiments of this application, the display unit 140 may be configured to display an interface of a generative application, a processing result, and the like.

The memory 120 may be configured to store instructions and data. The memory 120 may mainly include an instruction storage region and a data storage region. The data storage region may store various types of data such as a multimedia file and a text. The instruction storage region may store software units such as an operating system, an application, and instructions required by at least one function, or subsets and extended sets thereof. The memory 120 may further include a non-volatile random access memory, and provide hardware, software, a data resource, and the like in a management and calculation processing device to the processor 170, to support control on software and an application. The memory 120 is further configured to: store a multimedia file, and run a program and store an application.

The processor 170 is a control center of the terminal 100, connects parts of the entire terminal 100 by using various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application program, and the like. The modem processor mainly processes wireless communication. It may be understood that the modem processor may not be integrated into the processor 170. In some embodiments, the processor and the memory may be implemented on a single chip. In other embodiments, the processor and the memory may be implemented on separate chips. The processor 170 may be further configured to: generate a corresponding operation control signal, and send the operation control signal to a corresponding component in the calculation processing device, and read and process data in software, especially read and process the data and the program in the memory 120, so that functional modules perform corresponding functions, to control a corresponding component to perform an operation as required by an instruction.

The memory 120 may be configured to store software code related to the data processing method. The processor 170 may perform steps of the data processing method of the chip, or may schedule other units (for example, the input unit 130 and the display unit 140) to implement corresponding functions.

The radio frequency unit 110 (optional) may be configured to receive and send information or receive and send signals during a call. For example, after receiving downlink information of a base station, the radio frequency unit 110 sends the downlink information to the processor 170 for processing. In addition, the radio frequency unit 110 sends uplink-related data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communication standard or protocol, including but not limited to a global system for mobile communications (Global System for Mobile communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send image data or text data to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 by using a power management system, so that functions such as charging and discharging management and power consumption management are implemented by using the power management system.

The terminal 100 further includes the external interface 180. The external interface may be a standard micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein again. Some or all of methods described below may be applied to the terminal 100 shown in FIG. 1D.

The following describes a product form of the server 200 in FIG. 1C.

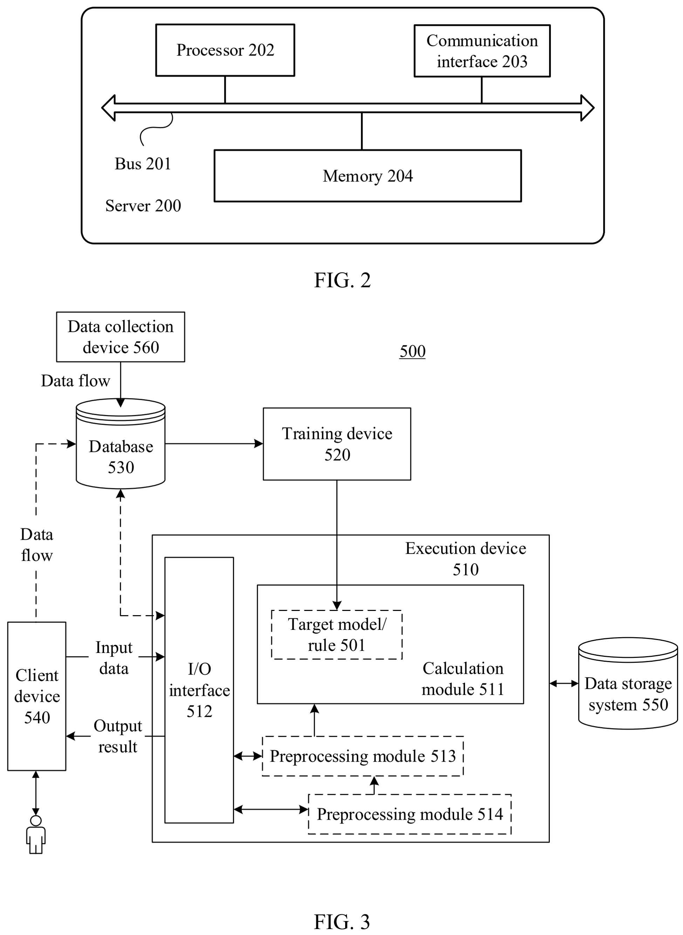

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 2, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to the data processing method. The processor 202 may perform steps of the data processing method of a chip, or may schedule another unit to implement a corresponding function.

It should be understood that the terminal 100 and the server 200 may be central or distributed devices. Processors (for example, the processor 170 and the processor 202) in the terminal 100 and the server 200 each may be a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the processor may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that steps related to a model inference process in embodiments of this application relate to an AI-related operation. When the AI operation is performed, an instruction execution architecture of the terminal device and the server is not limited to the architecture in which the processor and the memory are combined. The system architecture provided in embodiments of this application is described in detail below with reference to FIG. 3.

FIG. 3 is a diagram of the system architecture according to an embodiment of this application. As shown in FIG. 3, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the terminal device or the server that runs the generation application or an image classification or retrieval application.

The data collection device 560 is configured to collect a training sample. The training sample may be image data, text data, or the like. After collecting the training sample, the data collection device 560 stores the training sample in the database 530.

The training device 520 may train a to-be-trained neural network (for example, a neural network model (for example, including a text encoder and a diffusion model) in embodiments of this application) based on the training sample maintained in the database 530, to obtain the target model/rule 501.

It should be understood that the training device 520 may perform a pre-training process on the to-be-trained neural network based on the training sample maintained in the database 530, or perform fine-tuning on a model based on pre-training.

It should be noted that in an actual application, the training sample maintained in the database 530 is not necessarily collected by the data collection device 560, and may be received from another device. In addition, it should be noted that the training device 520 does not necessarily completely train the target model/rule 501 based on the training

EP 4 742 146 A1

sample maintained in the database 530, and may perform model training by obtaining a training sample from a cloud or another position. The foregoing descriptions should not be construed as a limitation on this embodiment of this application.

The target model/rule 501 obtained through training by the training device 520 may be applied to different systems or devices, for example, applied to the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal; or may be a server or the like.

Specifically, the training device 520 may transfer a trained model to the execution device 510.

In FIG. 3, the input/output (input/output, I/O) interface 512 is configured for the execution device 510, and is configured to exchange data with an external device. A user may input data (for example, image data or text data in embodiments of this application) to the I/O interface 512 through the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 in the execution device 510 performs a related processing process such as calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result for the client device 540, to provide the processing result for the user.

In the case shown in FIG. 3, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection end, collect the input data that is input to the I/O interface 512 and that is shown in the figure and the output result output from the I/O interface 512, use the input data and the output result as new sample data, and store the new sample data in the database 530. Certainly, the client device 540 may alternatively not perform collection. Instead, the I/O interface 512 directly stores, into the database 530 as new sample data, the input data input to the I/O interface 512 and the output result output from the I/O interface 512 that are shown in the figure.

It should be noted that FIG. 3 is merely a diagram of the system architecture according to an embodiment of this application. A location relationship between devices, components, modules, and the like shown in the figure does not constitute any limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows.

In embodiments of this application, the calculation module 511 in the execution device 510 may obtain the code stored in the data storage system 550, to implement steps related to a model inference process in embodiments of this application.

In embodiments of this application, the calculation module 511 of the execution device 510 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

Specifically, the calculation module 511 in the execution device 510 may be the hardware system that has the instruction execution function. The steps related to the model inference process provided in embodiments of this application may be software code stored in a memory. The calculation module 511 in the execution device 510 may obtain the software code from the memory, and execute the obtained software code to implement the steps related to the model inference process provided in embodiments of this application.

It should be understood that the calculation module 511 in the execution device 510 may be the combination of the hardware system that does not have the instruction execution function and the hardware system that has the instruction execution function. Some of the steps related to the model inference process provided in embodiments of this application may alternatively be implemented by the hardware system that does not have the instruction execution function in the calculation module 511 in the execution device 510. This is not limited herein.

Details from a perspective of model training are as follows.

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), a microprocessor, or a microcontroller), or a combination of these hardware circuits. For example, the training device 520 may be a hardware system that has an instruction execution function, for example, a CPU or a DSP, or may be a hardware system that does not have an instruction execution function, for example, an ASIC or an FPGA, or may be a combination of the hardware system that does not have the instruction execution function and the hardware system that has the instruction execution function.

It should be understood that the training device 520 may be the combination of the hardware system that does not have the instruction execution function and the hardware system that has the instruction execution function. Some of the steps related to model training provided in embodiments of this application may alternatively be implemented by the hardware system that does not have the instruction execution function in the training device 520. This is not limited herein.

2. Image synthesis cloud service provided by a server

In a possible implementation, the server may provide an image synthesis function-related service for a terminal side through an application programming interface (application programming interface, API).

A terminal device may send a related parameter (for example, data such as an image or a text) to the server through the API provided by the cloud. The server may obtain a processing result or the like based on the received parameter, and return the processing result to the terminal.

For descriptions of the terminal and the server, refer to the descriptions in the foregoing embodiments. Details are not described herein again.

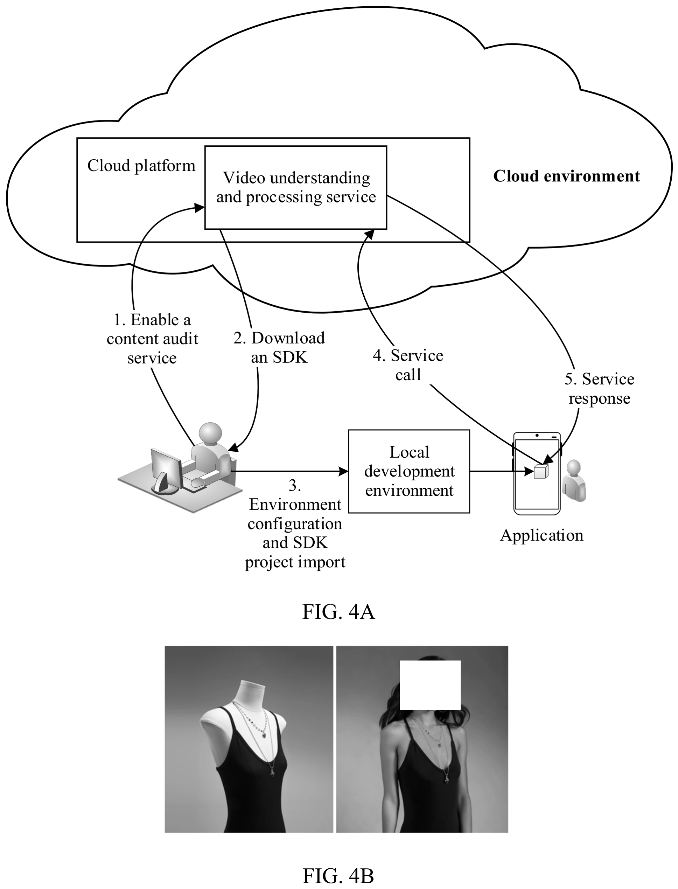

FIG. 4A shows a procedure of using an image synthesis function-related cloud service provided by a cloud platform.

1. Enable and purchase a content audit service

2. The user can download a software development kit (software development kit, SDK) corresponding to the content audit service. Usually, the cloud platform provides SDKs of a plurality of development versions for selection by the user according to a development environment requirement, for example, a Java-version SDK, a Python-version SDK, a PHP-version SDK, and an Android-version SDK.

3. After locally downloading an SDK of a corresponding version as required, the user imports an SDK project to a local development environment, and performs configuration and debugging in the local development environment. Another function may be further developed in the local development environment, to form an application that integrates an image synthesis function-related capability.

4. During use of the image synthesis function-related application, when the image synthesis function is required, an API call for the image synthesis function may be triggered. When an application triggers the image synthesis function, an API request is initiated to a running instance of the image synthesis function-related service in a cloud environment. The API request carries an image or a text, and the running instance in the cloud environment processes the image to obtain a processing result.

5. The cloud environment returns the processing result to the application. In this way, the image synthesis function is invoked once.

FIG. 4B is a diagram of application of image generation. An image with a head may be generated based on an image without a head.

Embodiments of this application relate to massive application of a neural network. Therefore, for ease of understanding, the following first describes related terms and related concepts such as the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f(\sum_{s=1}^{n} W_s x_s + b).$$

Herein, s=1, 2, ..., and n. n is a natural number greater than 1. Ws is a weight of xs. b is a bias of the neuron. f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons that are in a rectangular arrangement. Neurons in a same feature plane share a weight, and the weight shared herein is a convolution kernel. Weight sharing can be understood as a feature extraction manner that is independent of a position. The convolution kernel may be in a form of a matrix of a random size. In a training process of the convolutional neural network, a proper weight may be obtained for the convolution kernel through learning. In addition, benefits directly brought by weight sharing are that connections among layers of the convolutional neural network are reduced, and an overfitting risk is reduced.

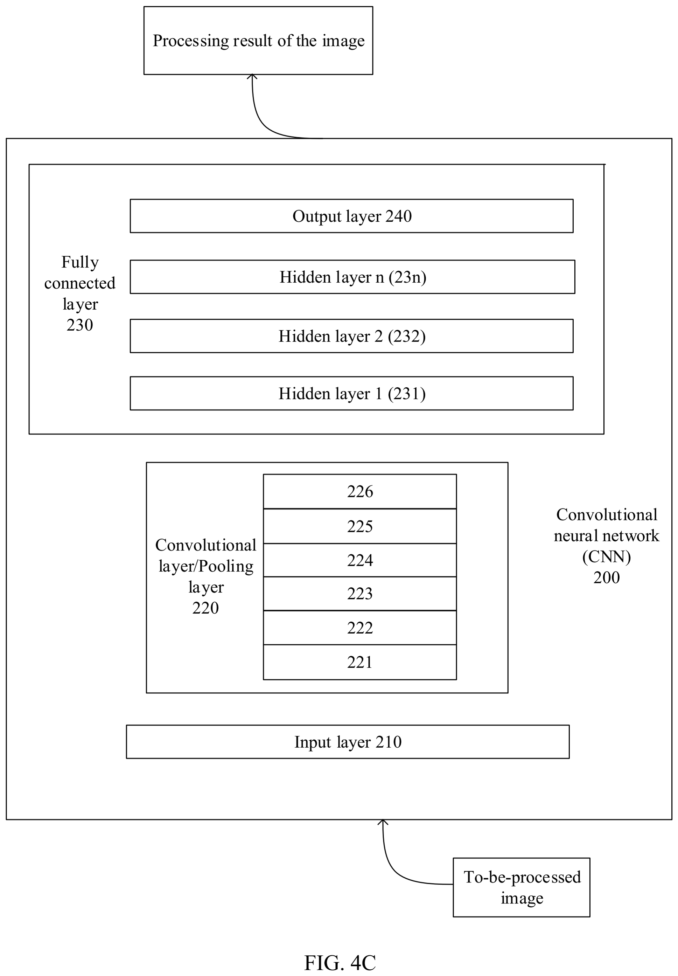

The CNN is a very common neural network. The following primarily describes a structure of the CNN in detail with reference to FIG. 4C. As described in the foregoing basic concepts, the convolutional neural network is a deep neural network with a convolutional structure, and is a deep learning (deep learning) architecture. In the deep learning architecture, multi-layer learning is performed at different abstract levels according to a machine learning algorithm. As a deep learning architecture, the CNN is a feed-forward (feed-forward) artificial neural network, and each neuron in the feed-forward artificial neural network may respond to an image input to the feed-forward artificial neural network.

As shown in FIG. 4C, a convolutional neural network (CNN) 200 may include an input layer 210, a convolutional layer/pooling layer 220 (the pooling layer is optional), and a fully connected layer (fully connected layer) 230.

Convolutional layer/pooling layer 220:

Convolutional layer:

As shown in FIG. 4C, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. In other words, an output of a convolutional layer may be used as an input of a subsequent pooling layer, or may be used as an input of another convolutional layer to continue a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes one pixel after another pixel (or two pixels after another two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows×columns). Feature maps extracted by using the plurality of weight matrices with the same size also have a same size. Then the plurality of extracted feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 includes a plurality of convolutional layers, a large quantity of general features are usually extracted at an initial convolutional layer (for example, the convolutional layer 221). The general feature may be also referred to as a low-level feature. As a depth of the convolutional neural network 200 increases, a feature extracted at a more subsequent convolutional layer (for example, the convolutional layer 226) is more complex, for example, a high-level semantic feature. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 221 to 226 in the layer 220 shown in FIG. 4C, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on an input image to obtain an image with a small size. The average pooling operator may be used to calculate pixel values in the image in a specific range, to generate an average value. The average value is used an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Fully connected layer 230:

After processing is performed at the convolutional layer/pooling layer 220, the convolutional neural network 200 still cannot output required output information. As described above, at the convolutional layer/pooling layer 220, only a feature is extracted, and parameters brought by an input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231, 232, ..., and 23n shown in FIG. 4C). Parameters included in the plurality of hidden layers may be obtained by performing pre-training based on related training data of a specific task type. For example, the task type may include image recognition, image classification, super-resolution image reconstruction, and the like.

The plurality of hidden layers in the fully connected layer 230 are followed by the output layer 240, that is, the last layer of the entire convolutional neural network 200. The output layer 240 has a loss function similar to classification cross-entropy, and the loss function is specifically used to calculate a prediction error. Once forward propagation of the entire convolutional neural network 200 (as shown in FIG. 4C, propagation from the layer 210 to the layer 240 is forward propagation) is completed, back propagation (as shown in FIG. 4C, propagation from the layer 240 to the layer 210 is back propagation) is started to update weight values and deviations of the layers mentioned above, to reduce a loss of the convolutional neural network 200 and an error between a result output by the convolutional neural network 200 through the output layer and an ideal result.

It should be noted that the convolutional neural network 200 shown in FIG. 4C is merely used as an example of a convolutional neural network. During specific application, the convolutional neural network may alternatively exist in a form of another network model, for example, include only a part of the network structure shown in FIG. 4C. For example, the convolutional neural network used in this embodiment of this application may include only the input layer 210, the convolutional layer/pooling layer 220, and the output layer 240.

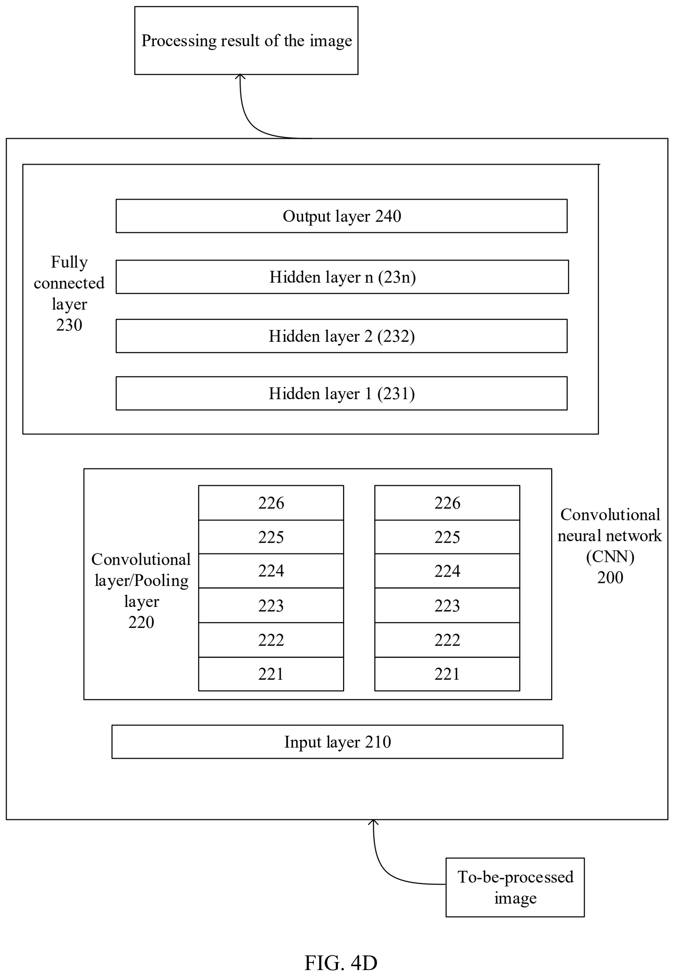

It should be noted that the convolutional neural network 100 shown in FIG. 4C is merely used as an example of a convolutional neural network. During specific application, the convolutional neural network may alternatively exist in a form of another network model. For example, as shown in FIG. 4D, there are a plurality of parallel convolutional layers/pooling layers, and extracted features are all input to the fully connected layer 230 for processing.

(3) Deep neural network

The deep neural network (Deep Neural Network, DNN), also referred to as a multi-layer neural network, may be understood as a neural network having many hidden layers. The "many" herein does not have a special measurement standard. The DNN is divided based on positions of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, b is an offset vector, W is a weight matrix (also referred to as a coefficient), and $\alpha()$ is an activation function. At each layer, such a simple operation is performed on the input vector $\vec{x}$, to obtain the output vector $\vec{y}$. Because the DNN has a large quantity of layers, a quantity of coefficients W and a quantity of offset vectors b are also large. Definitions of these parameters in the DNN are as follows: The coefficient W is used as an example. It is assumed that in a DNN having three layers, a linear coefficient from a $4^{th}$ neuron at a $2^{nd}$ layer to a $2^{nd}$ neuron at a $3^{rd}$ layer is defined as $W_{24}^{3}$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer does not have the parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(4) Transformer layer

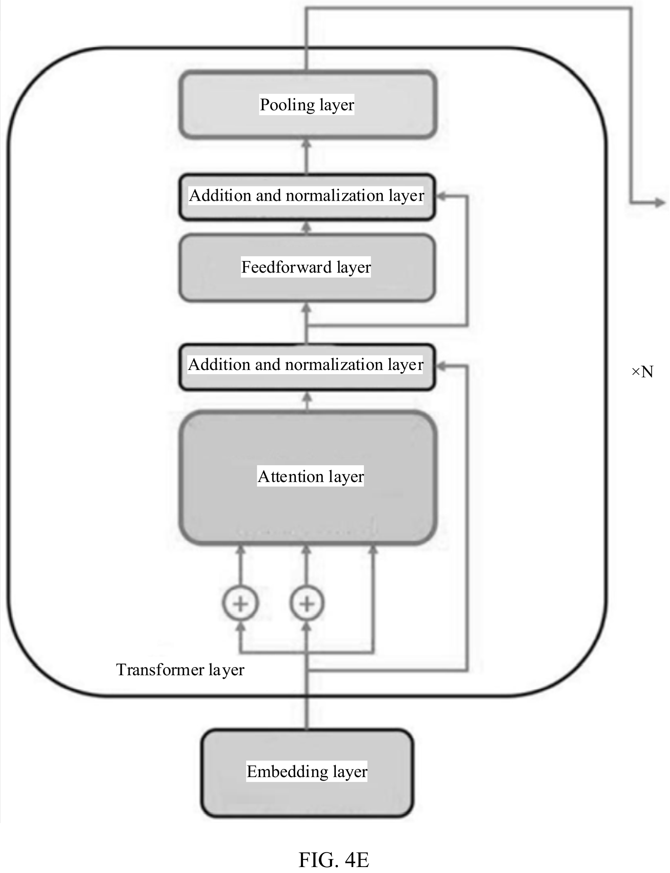

FIG. 4E is a diagram of an architecture of a transformer layer. As shown in FIG. 4E, a neural network includes an embedding layer and at least one transformer layer. The at least one transformer layer may be N transformer layers (N is an integer greater than 0). Each transformer layer includes an attention layer, an addition and normalization (add & norm) layer, a feedforward (feedforward) layer, and an addition and normalization layer that are sequentially adjacent. At the embedding layer, embedding processing is performed on a current input, to obtain a plurality of feature vectors. At the attention layer, P input vectors are obtained from a layer preceding the transformer layer, any first input vector in the P input vectors is used as a center, and an intermediate vector corresponding to the first input vector is obtained based on a degree of correlation between each input vector within a preset attention window and the first input vector. In this way, P intermediate vectors corresponding to the P input vectors are determined. At a pooling layer, the P intermediate vectors are combined into Q output vectors. A plurality of output vectors obtained at a last transformer layer in the at least one transformer layer are used as feature representations of the current input.

The foregoing steps are described below in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a piece of text or a sentence. The text may be Chinese text, English text, or text in another language. After the current input is obtained, embedding processing may be performed on all words in the current input at the embedding layer, to obtain feature vectors of all the words. In some embodiments, as shown in FIG. 4E, the embedding layer includes an input embedding layer and a positional encoding (positional encoding) layer. At the input embedding layer, word embedding processing may be performed on all the words in the current input, to obtain word embedding vectors of all the words. At the positional encoding layer, positions of all the words in the current input may be obtained, to generate position vectors for the positions of all the words. In some examples, the positions of all the words may be absolute positions of all the words in the current input. For example, the current input is "what date should the Huabei debt be repaid", where a position of "what" may be represented as a first position, a position of "date" may be represented as a second position, and so on. In some examples, the positions of all the words may be positions of all the words relative to each other. For example, the current input is still "what date should the debt be repaid", where a position of "what" may be represented as preceding "date", a position of "date" may be represented as following "what" and preceding "should", and so on. When the word embedding vectors and the position vectors of all the words in the current input are obtained, the position vectors of all the words and the corresponding word embedding vectors may be combined to obtain the feature vectors of all the words, namely, the plurality of feature vectors corresponding to the current input. The plurality of feature vectors may be represented as an embedding matrix with a preset dimension. For the plurality of feature vectors, a quantity of the feature vectors may be set to M, and the preset dimension may be set to a dimension of H. In this case, the plurality of feature vectors may be represented as an M×H embedding matrix.

Then, the P input vectors are obtained from a layer preceding a first transformer layer, the any first input vector in the P input vectors is used as the center, and the intermediate vector corresponding to the first input vector is obtained based on the degree of correlation between each input vector within the preset attention window and the first input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

In some embodiments, the first transformer layer may be a layer following the embedding layer, and the P input vectors are the plurality of feature vectors obtained from the embedding layer. In some embodiments, the at least one transformer layer in the neural network provided in this embodiment of this specification further includes a second transformer layer. The second transformer layer is a layer preceding first self-attention. In this case, the P input vectors are P output vectors that are output from the second transformer layer. At the last transformer layer in the neural network, the plurality of output vectors obtained by performing the foregoing steps may be used as the feature representations of the current input. The feature representation is a feature representation, of the current input, suitable for computer processing.

(5) Attention mechanism (attention mechanism)

The attention mechanism simulates an internal process of a biological observation behavior, is a mechanism that aligns internal experience with external feelings to increase observation precision of some regions, and can quickly select high-value information from a large amount of information by using limited attention resources. The attention mechanism can quickly extract an important feature of sparse data, and therefore is widely used in natural language processing tasks, especially machine translation. A self-attention mechanism (self-attention mechanism) is improvement of the attention mechanism. The self-attention mechanism becomes less dependent on external information and is better at capturing an internal correlation of data or features. An essential idea of the attention mechanism may be rewritten as the following formula:

Herein, Lx=∥Source∥ represents a length of a source. The formula means that constituent elements in the source are assumed to include a series of data pairs. In this case, an element query in a target (target) is given, similarity or a correlation between the query and each key is calculated to obtain a weight coefficient of a value corresponding to each key, and then weighted summation is performed on values, to obtain a final attention value. Therefore, in essence, the attention mechanism is to perform weighted summation on values of the elements in the source, and a query and key are used to calculate a weight coefficient of a corresponding value. Conceptually, attention may be understood as selecting a small amount of important information from a large amount of information, focusing on the important information, and ignoring most of unimportant information. A process of focusing is reflected in calculation of the weight coefficient. A greater weight indicates that a value corresponding to the weight is more focused, that is, the weight indicates importance of information, and the value is the information corresponding to the weight. The self-attention mechanism may be understood as an intra-attention (intra-attention) mechanism. The attention mechanism occurs between the element query in the target and all the elements in the source. The self-attention mechanism is an attention mechanism that occurs between elements in a source or between elements in a target, and may also be understood as an attention calculation mechanism in a special case of Target=Source. A specific calculation process of the self-attention mechanism is the same except that a calculation object changes.

(6) Loss function

In a process of training the deep neural network, because it is expected that an output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before a first update, that is, preconfiguring parameters for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(7) Back propagation algorithm

An error back propagation (back propagation, BP) algorithm may be used to correct a value of a parameter in an initial model in a training process, so that an error loss of the model becomes increasingly small. Specifically, an input signal is transferred forward until an error loss occurs in an output, and the parameter in the initial model is updated based on back propagation error loss information, so that the error loss converges. The back propagation algorithm is an error-loss-centered back propagation motion, and is intended to obtain an optimal model parameter, for example, a weight matrix.

(8) Diffusion model (diffusion model)

The diffusion model is a generative model used to generate data such as an image and a text. A core idea of the diffusion model is to restore original data by performing noise diffusion on the data and then gradually removing noise. The diffusion model includes two phases: a forward process (noise diffusion) and a reverse process (denoising recovery).

A stable diffusion model (stable diffusion model, which may be referred to as a diffusion model for short) is a generative model, and is configured to generate high-fidelity multimedia data, such as an image, a voice, and a video. The diffusion model generates an image through a diffusion process. The model performs a plurality of diffusion and reverse diffusion operations on noise, to complete training and inference of the model. This makes the generation process of the diffusion model more stable and less prone to issues such as mode collapse.

The generative model is a model that generates new data approximately following target distribution by simulating data distribution. The diffusion model is among the best-performing generative models in recent years. It defines a forward Markov chain to gradually add noise to data, and then learns its reverse process to transform noise back into data.

To ensure that stationary distribution approximates noise distribution, the diffusion model requires a sufficient quantity of iterations T (typically, T=1000). An original sampling method of the diffusion model is equivalent to performing T-step reverse sampling of a Markov chain, which is highly time-consuming and hinders widespread application of the diffusion model in downstream tasks.

Therefore, a fast and high-quality sampling method for the diffusion model is urgently required.

To resolve the foregoing problem, embodiments of this application provide a data processing method. The following describes in detail the data processing method in embodiments of this application with reference to accompanying drawings.

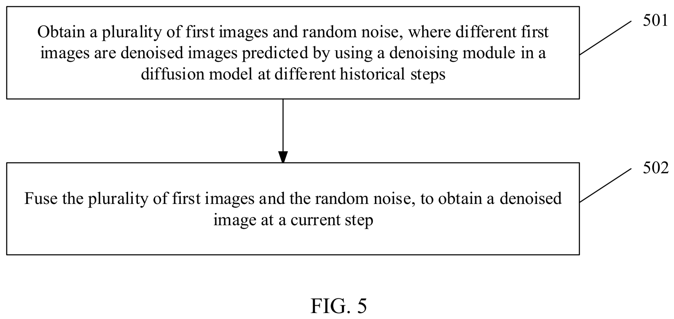

FIG. 5 is a schematic flowchart of the data processing method according to an embodiment of this application. As shown in FIG. 5, the data processing method provided in this embodiment of this application may include steps 501 and 502. The following separately describes these steps in detail.

501: Obtain a plurality of first images and random noise, where different first images are denoised images predicted by using a denoising module in a diffusion model at different historical steps.

An embodiment corresponding to FIG. 5 may be an inference process of the diffusion model, or a feedforward process of diffusion model training, for example, a model pre-training process or a model fine-tuning process.

An architecture of the diffusion model to which this embodiment of this application may be applied includes but is not limited to the following two examples.

Architecture 1: Stable Diffusion-AIGC

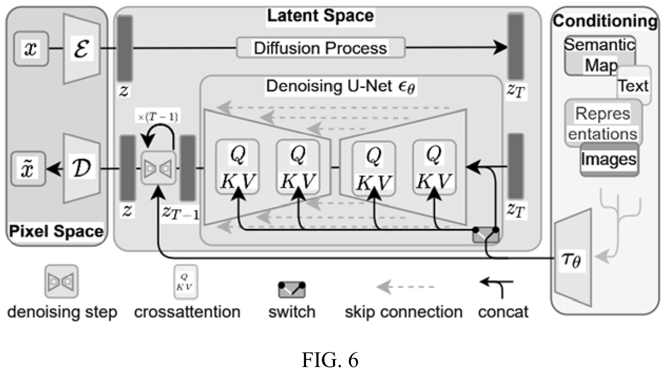

Refer to FIG. 6. The architecture mainly includes an encoder module, a decoder module, a denoising module, and a conditional injection module. The encoder module is configured to encode an image x from an RGB pixel space into a latent space to obtain a latent state representation z. The decoder module is configured to decode the latent state z from the latent space to x̃ in the RGB pixel space. The denoising module is configured to fit a score function of a diffusion process in the latent space. The conditional injection module is configured to inject conditional information into a U-Net.

This embodiment of this application may be applied to an iterative denoising process in a latent space of Stable Diffusion-AIGC, that is, a process of transforming $z_T$ into $z_{T-1}$ with reference to information from the denoising module in FIG. 6.

Architecture 2: ControlNet-AIGC

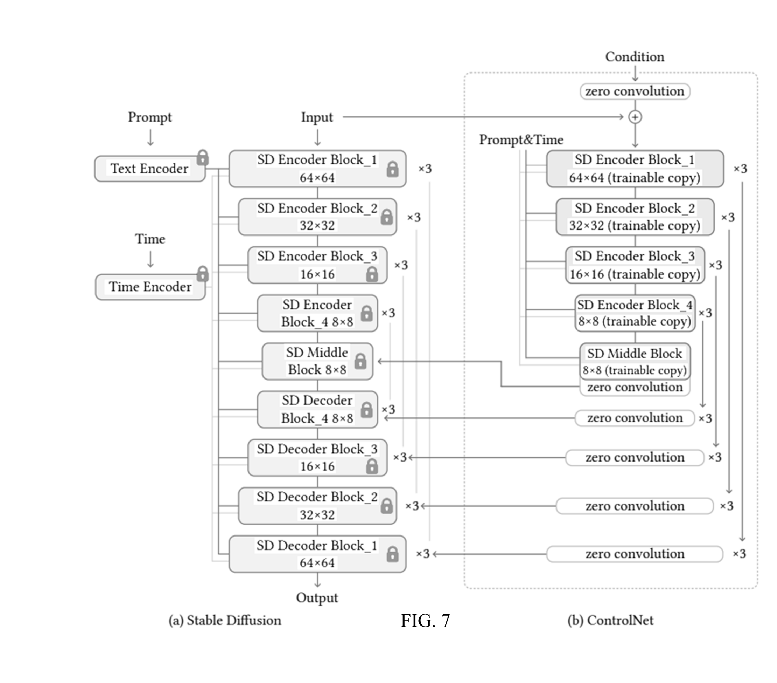

ControlNet-AIGC is a neural network structure that can efficiently add new conditional control. FIG. 7 shows a principle of ControlNet-AIGC, in which parameters of an original denoising module are duplicated and outputs are connected layer by layer. During fine tuning, the parameters of the original denoising module are frozen (not involved in training), while parameters of ControlNet are involved in training. Upon completion of training, a newly concatenated denoising module replaces the original denoising module.

This embodiment of this application may be applied to an iterative denoising process of ControlNet-AIGC, that is, a process of transforming $z_T$ into $z_{T-1}$ with reference to information from a trained ControlNet denoising module.

The following describes the data processing method in embodiments of this application.

In a noise diffusion phase of the diffusion model, an image encoder may encode an input image to obtain an image feature corresponding to the image. For example, an input image x is given, and a potential feature z of the image may be obtained by using the image encoder V (for example, a convolutional neural network with downsampling may be used), that is, z = $V(x) \in \mathbb{R}^{H*W*d}$ .

Optionally, the image encoder may include a convolutional neural network, and is configured to extract a global image feature with lower resolution, to reduce a calculation amount of a subsequent network. The encoder reduces resolution of an original image from H*W to $\dfrac{H}{r} * \dfrac{W}{r}$ , where r is a downsampling ratio.

In a denoising phase of the diffusion model, a diffusion model $x_\theta$ is given, and a Gaussian random variable ξ is sampled following N(0, I) as an initial state of the diffusion model, that is, $x_{t_0} = \xi$.

A time difference strategy may be selected. For example, a time difference step 1e - 3 = $t_M < t_{M-1} < \cdots < t_0 = 1$ is selected. In the following process, as shown in FIG. 8, a calculation process from a time step $t_i$ to a time step $t_{i+1}$ is used as an example. This embodiment of this application may follow this procedure to perform calculation from a time step $t_0$ to $t_M$.

The denoising module may be a neural network of a U-Net architecture. The U-Net is an end-to-end convolutional neural network, and is mainly used for image segmentation. The U-Net is characterized by a U-shaped structure, including an encoder and a decoder. The encoder uses a convolution layer and a maximum pooling layer to implement feature extraction and downsampling, while the decoder performs upsampling and skips connections to implement feature fusion and recovery. This architecture is mainly used to predict noise added to an image feature during forward propagation of the diffusion framework (or the denoising module may be configured to predict a denoised image).

It should be understood that a module used for noise prediction and a module used for denoised image prediction are mutually converted in a specific mapping manner.

When an image is generated by using the diffusion model, noise may be added to an original image (or a feature representation of the original image) by using a noise addition module of the diffusion model. Specifically, Gaussian noise may be gradually added to a sample according to a given variance specified by $\beta_t$ to generate a series of latent variables $x_1, x_2, \ldots , x_T$, where $t$ is a step count (or may be referred to as a step) for adding noise, and N represents a normal distribution:

$$q(x_t|x_{t-1}) = \text{N}(x_t; \sqrt{1-\beta_t}x_{t-1}, \beta_t I).$$

Then, a denoising module $\Phi_\theta(x_t, t)$ (that is, a denoising model in the diffusion model) is trained to approximate a real posterior distribution, where $u_\theta$ and $\Sigma_\theta$ are a mean value and a variance predicted by the model:

$$p_\theta(x_{t-1}|x_t) = \text{N}(u_\theta(x_t, t), \Sigma_\theta(x_t, t)).$$

To enable execution of a reverse denoising process for sampling, the procedure starts from random noise $x_T \sim N(0, I)$, and progressively reduces noise to ultimately obtain a sample $x_0$. An existing method uses a denoising network $\Phi_\theta(x_t, t)$, which predicts a noise component of a noise sample and is trained with the following objective:

$$\mathcal{L} = \text{E}_{x,\epsilon,t}||\epsilon - \Phi_\theta(x_t, t)||^2.$$

t may be uniformly sampled from 1,2, ..., T, and $\varepsilon$ is noise added by the model at each step.

In this embodiment of this application, during prediction at a specific step (which may be predicting either noise or a denoised image), denoised images (namely, the first images) predicted the denoisng model at a plurality of historical steps and random noise may be obtained.

For example, with reference to the following formula, $X_\theta$ may be a denoising model, $t_i$ is a latest step, $t_{i+1}$ is a current step, and $t_{i-j}$ is a historical step, which is equivalent to that outputs of the denoising model at a total of s historical steps from $t_i$ to $t_{i-s+1}$ may be obtained.

It should be understood that model outputs at a plurality of historical steps defined in another manner may be further obtained, for example, latest 1, 3, 5, or 7 steps, or selected randomly. This is not limited in this application.

$$x_{t_{i+1}} = \frac{\sigma_{t_{i+1}}}{\sigma_{t_i}} e^{-\int_{\lambda_{t_i}}^{\lambda_{t_{i+1}}} \tau^2(\tilde{\lambda})\mathrm{d}\tilde{\lambda}} x_{t_i} + \sum_{j=0}^{s-1} b_{i-j} x_0\left(x_{t_{i-j}}, t_{i-j}\right) + \tilde{\sigma}_i \xi.$$

In a possible implementation, the random noise is Gaussian random noise.

In a possible implementation, a denoised image (for example, $X_{t_i}$ in the foregoing formula) at a latest step may be further obtained.

It should be understood that the denoised image at the latest step may be a denoised image at the latest step obtained in a manner similar to step 502 in a subsequent embodiment, instead of an output of the denoising model.

502: Fuse the plurality of first images and the random noise, to obtain a denoised image at a current step.

In a possible implementation, a first weight corresponding to each historical step may be determined. Each first weight is related to a value obtained by mapping the historical step using a target mapping method, and the target mapping method is used to determine a magnitude of randomness at each step. The plurality of first images and the random noise are fused based on the first weight. That is, each first weight is used as a weight of a corresponding first image, and the plurality of first images are fused.

For example, $b_{i-j}$ in the foregoing formula may be the first weight.

In a possible implementation, each first weight is specifically obtained by performing a stochastic Adams method on the value obtained by mapping the historical step using the target mapping method. By using the stochastic Adams method, problems of low efficiency and slow convergence of numerical schemes used in the existing technologies can be overcome.

Specifically, a target mapping method (for example, a variance control function $\tau(t)$) may be given. $\tau(t)$ may determine a magnitude of randomness in a sampling process. For example, the variance control function $\tau(t)$ may be a piecewise constant function or the like.

In this embodiment of this application, the variance control function $\tau(t)$ is applied to better control randomness in a sampling process. In comparison with a deterministic sampling method, randomness is introduced to improve sampling quality, and in comparison with an existing random sampling method, randomness in a sampling process is controllable.

A corresponding value (namely, an analytical variance) may be obtained by calculating a first image at each historical step according to the target mapping method. For example, the analytical variance may be calculated by using the following formula:

$$\tilde{\sigma}_i = \sigma_{t_{i+1}} \sqrt{1 - e^{-2\int_{\lambda_{t_i}}^{\lambda_{t_{i+1}}} \tau^2(\tilde{\lambda})\mathrm{d}\tilde{\lambda}}}.$$

The analytical variance of the foregoing formula may represent a magnitude of randomness required in a process from a time step $t_{i+1}$ to a time step $t_i$.

The first weight may be determined by the corresponding value obtained by calculating the first image at each historical step according to the target mapping method. For example, the first weight may be obtained by calculating, by using the stochastic Adams method, a corresponding value obtained by calculating the first image at each historical step according to the target mapping method. For example, the first weight may be calculated with reference to the following formula:

$$b_{i-j} = \sigma_{t_{i+1}} \int_{\lambda_{t_i}}^{\lambda_{t_{i+1}}} e^{-\int_{\lambda}^{\lambda_{t_{i+1}}} \tau^2(\tilde{\lambda})\mathrm{d}\tilde{\lambda}} \left(1 + \tau^2(\lambda)\right) e^{\lambda} l_{i-j}(\lambda)\mathrm{d}\lambda, \quad \forall 0 \le j \le s-1.$$

In a possible implementation, a second weight corresponding to the random noise may be further determined. The second weight is related to the value obtained by mapping the historical step using the target mapping method, and the target mapping method is used to determine the magnitude of randomness at each step. The plurality of first images and the random noise are fused based on the second weight.

For example, the second weight may be obtained by using a manner of calculating the analytical variance in the foregoing formula.

In a possible implementation, in addition to fusion of the plurality of first images and the random noise, the denoised image obtained at the latest step may be further fused.

With reference to the foregoing fusion formula, $X_{t_i}$ may be the denoised image obtained at the latest step. When the denoised image obtained at the latest step is calculated, the denoised image may be determined by a fusion result of images obtained at a plurality of historical steps and random noise. This is not limited in this application.

In a possible implementation, a third weight corresponding to the denoised image obtained at the latest step may be determined. The third weight is related to a value obtained by mapping the latest step using the target mapping method, and the target mapping method is used to determine the magnitude of randomness at each step. The denoised image obtained at the latest step, the plurality of first images, and the random noise are fused based on the third weight.

For example, the third weight may be determined by using the following formula:

$$\frac{\sigma_{t_{i+1}}}{\sigma_{t_i}} e^{-\int_{\lambda_{t_i}}^{\lambda_{t_{i+1}}} \tau^2(\tilde{\lambda})\mathrm{d}\tilde{\lambda}}.$$

In this embodiment of this application, a next state (that is, a denoised image at a current step) is obtained by summing a linear combination of model outputs from several previous steps, linear scaling of a previous state, and Gaussian noise having an analytical variance.

In a possible implementation, a result obtained by fusing the plurality of first images and the random noise may be used as an initial value of the denoised image at the current step. The initial value is processed by using a denoising module in the diffusion model, to obtain a processing result. The processing result, the plurality of first images, and the random noise are fused, to obtain the denoised image at the current step.

This is equivalent to correcting a result obtained by fusing the plurality of first images and the random noise, thereby improving prediction precision and consequently reducing a quantity of sampling times. By introducing a prediction correction method, sampling error is reduced under same calculation consumption.

During correction, a fourth weight corresponding to the processing result may be determined. The fourth weight is related to a value obtained by mapping the current step using the target mapping method, and the target mapping method is used to determine the magnitude of randomness at each step. The processing result, the plurality of first images, and the random noise are fused based on the fourth weight.

It should be understood that, during fusion, weights corresponding to the plurality of first images may be different from the first weights (because a quantity of steps in this case has changed).

For example, a result $x_{t_{i+1}}$ obtained by fusing the plurality of first images and the random noise may be used as the initial value $x_{t_{i+1}}{}^p$ of the denoised image at the current step. An output $x_\theta(x_{t_{i+1}}{}^p, t_{i+1})$ of a model $x_\theta$ on a predicted value of $x_{t_{i+1}}$ is calculated, and a coefficient of SA-Corrector is calculated:

$$\hat{b}_{i-j} - \sigma_{t_{i+1}} \int_{\lambda_{t_i}}^{\lambda_{t_{i+1}}} e^{-\int_\lambda^{\lambda_{t_{i+1}}} \tau^2(\tilde{\lambda})\mathrm{d}\tilde{\lambda}} \left(1 + \tau^2(\lambda)\right) e^\lambda \hat{l}_{i-j}(\lambda)\mathrm{d}\lambda, \quad \forall 0 \le j \le s - 1$$

$$\hat{b}_{i+1} - \sigma_{t_{i+1}} \int_{\lambda_{t_i}}^{\lambda_{t_{i+1}}} e^{-\int_\lambda^{\lambda_{t_{i+1}}} \tau^2(\tilde{\lambda})\mathrm{d}\tilde{\lambda}} \left(1 + \tau^2(\lambda)\right) e^\lambda \hat{l}_{i+1}(\lambda)\mathrm{d}\lambda$$

Then, a correction value of $x_{t_{i+1}}$ is calculated:

$$x_{t_{i+1}} = \frac{\sigma_{t_{i+1}}}{\sigma_{t_i}} e^{-\int_{\lambda_{t_i}}^{\lambda_{t_{i+1}}} \tau^2(\tilde{\lambda})\mathrm{d}\tilde{\lambda}} x_{t_i} + \hat{b}_{i+1} x_\theta(x_{t_{i+1}}^p, t_{i+1}) + \sum_{j=0}^{\hat{s}-1} \hat{b}_{i-j} x_\theta(x_{t_{i-j}}, t_{i-j}) + \tilde{\sigma}_i \xi.$$

In this embodiment of this application, the foregoing steps may be repeated until $x_{t_M}$ is obtained, at which point an algorithm terminates and $x_{t_M}$ is output.

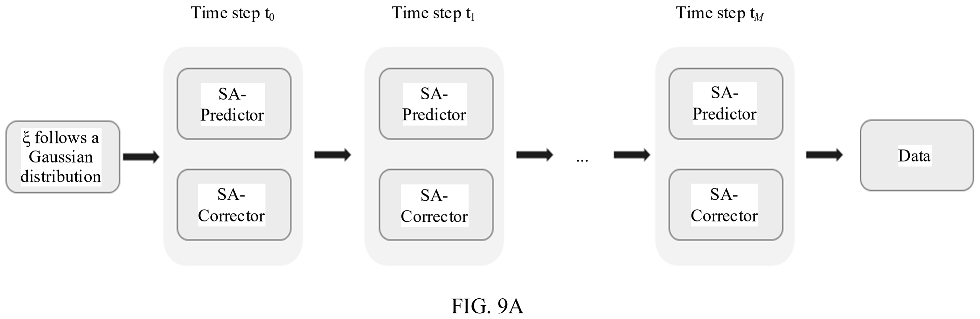

Refer to FIG. 9A. An architecture SA-Solver in this embodiment of this application may include two modules: an SA-Predictor and an SA-Corrector, respectively. In this embodiment, sampling is performed from a pre-trained diffusion model using an embodiment of this application. A core procedure is shown in FIG. 9A.

The following describes beneficial effects of this embodiment of this application with reference to experiments.

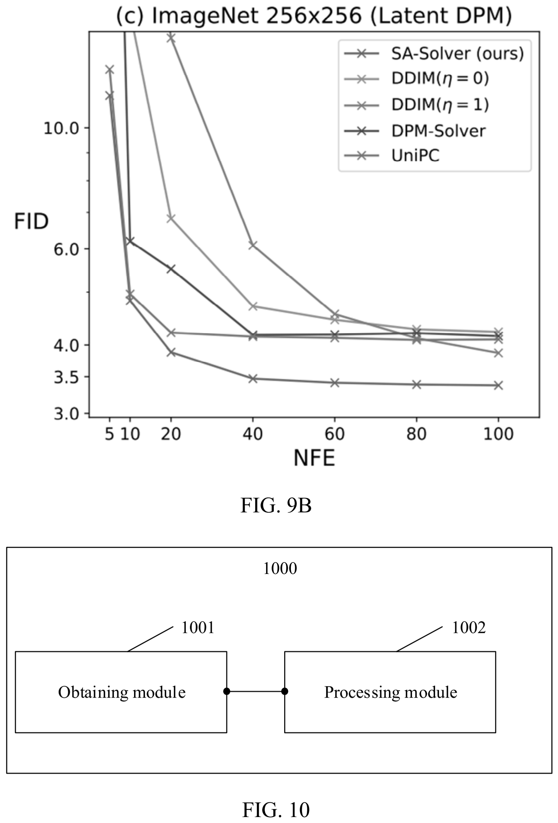

FIG. 9B and Table 1 show technical effects of upsampling performed by the SA-Solver architecture on Latent LDM ImageNet 256x256 according to an embodiment of this application.

Table 1

| Method \ NFE | 5 | 10 | 20 | 40 | 60 | 80 | 100 |
|---|---|---|---|---|---|---|---|
| DDIM($\eta = 0$) | 58.68 | 16.32 | 6.82 | 4.71 | 4.45 | 4.28 | 4.23 |
| DPM-Solver | 166.88 | 6.19 | 5.51 | 4.17 | 4.18 | 4.21 | 4.15 |
| UniPC | 12.79 | 4.96 | 4.21 | 4.14 | 4.12 | 4.09 | 4.10 |
| DDIM($\eta = 1$) | 138.91 | 50.05 | 14.60 | 6.09 | 4.56 | 4.12 | 3.87 |
| SA-Solver | **11.46** | **4.82** | **3.88** | **3.47** | **3.41** | **3.39** | **3.38** |

An FID is an important indicator for evaluating performance of a generative model. A smaller FID indicates higher quality of a generated image. As shown in FIG. 9B and Table 1, in this embodiment of this application, FIDs at different step counts on ImageNet 256x256 dataset are better than those in a baseline method, demonstrating the beneficial technical effects of this embodiment of this application.

Table 2 shows a comparison between an embodiment of this application applied to a current optimal pre-trained model and the baseline method.

Table 2

| Method | FID ($\downarrow$) |
|---|---|
| DiT ImageNet 256x256 | |
| DDPM (NFE=250) [41] | 2.27 |
| **SA-Solver (Ours)** (NFE=60) | **2.02** |
| Min-SNR ImageNet 256x256 | |
| Heun (NFE=50) [42] | 2.06 |
| **SA-Solver (Ours)** (NFE=20) | **1.93** |
| DiT ImageNet 512x512 | |
| DDPM (NFE=250) [41] | 3.04 |
| **SA-Solver (Ours)** (NFE=60) | **2.80** |

As shown in Table 2, this embodiment of this application is applied to a current SOTA pre-trained model, and a lower FID value is obtained when a sampling time is accelerated by 2.5x to 4x. An SOTA FID result for the diffusion model is obtained on ImageNet 512x512. This describes beneficial technical effects of embodiments of this application.

FIG. 10 is a diagram of a structure of a data processing apparatus according to an embodiment of this application. As shown in FIG. 10, the data processing apparatus 1000 provided in this embodiment of this application includes the following modules.

An obtaining module 1001 is configured to obtain a plurality of first images and random noise, where different first images are denoised images predicted by using a denoising module in a diffusion model at different historical steps.

For specific descriptions of the obtaining module 1001, refer to the descriptions of step 501 in the foregoing embodiment. Details are not described herein again.

A processing module 1002 is configured to fuse the plurality of first images and the random noise, to obtain a denoised image at a current step.

For specific descriptions of the processing module 1002, refer to the descriptions of step 502 in the foregoing embodiment. Details are not described herein again.

In a possible implementation, the processing module 1002 is further configured to:

determine a first weight corresponding to each historical step, where each first weight is related to a value obtained by mapping the historical step using a target mapping method, and the target mapping method is used to determine a magnitude of randomness at each step; and
fuse the plurality of first images and the random noise based on the first weight.

In a possible implementation, the processing module 1002 is further configured to:
determine a first weight corresponding to each historical step, where each first weight is related to a value obtained by mapping the historical step using a target mapping method, and the target mapping method is used to determine a magnitude of randomness at each step.

The processing module 1002 is specifically configured to:
fuse the plurality of first images and the random noise based on a plurality of first weights.

In a possible implementation, each first weight is specifically obtained by performing a stochastic Adams method on the value obtained by mapping the historical step using the target mapping method.

In a possible implementation, the processing module 1002 is further configured to:
determine a second weight corresponding to the random noise, where the second weight is related to the value obtained by mapping the historical step using the target mapping method, and the target mapping method is used to determine the magnitude of randomness at each step.

The processing module 1002 is specifically configured to:
fuse the plurality of first images and the random noise based on the second weight.

In a possible implementation, the processing module 1002 is specifically configured to:
fuse a denoised image obtained at a latest step, the plurality of first images, and the random noise.

In a possible implementation, the processing module 1002 is further configured to:
determine a third weight corresponding to the denoised image obtained at the latest step, where the third weight is related to a value obtained by mapping the latest step using the target mapping method, and the target mapping method is used to determine the magnitude of randomness at each step.

The processing module 1002 is specifically configured to:
fuse the denoised image obtained at the latest step, the plurality of first images, and the random noise based on the third weight.

In a possible implementation, the target mapping method is a piecewise constant function.

In a possible implementation, the random noise is Gaussian random noise.

In a possible implementation, the processing module 1002 is specifically configured to:

fuse the plurality of first images and the random noise, to obtain an initial value of the denoised image at the current step;
process the initial value by using a denoising module in the diffusion model, to obtain a processing result; and
fuse the processing result, the plurality of first images, and the random noise, to obtain the denoised image at the current step.

In a possible implementation, the processing module 1002 is further configured to:
determine a fourth weight corresponding to the processing result, where the fourth weight is related to a value obtained by mapping the current step using the target mapping method, and the target mapping method is used to determine the magnitude of randomness at each step.

The processing module 1002 is specifically configured to:
fuse the processing result, the plurality of first images, and the random noise based on the fourth weight.

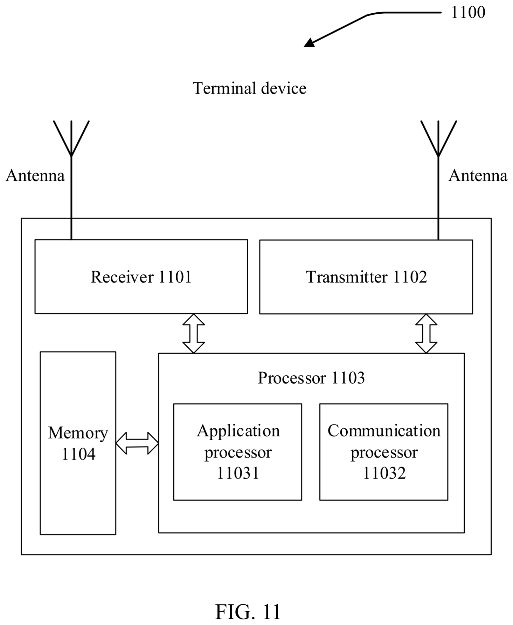

The following describes a terminal device provided in an embodiment of this application. FIG. 11 is a diagram of a structure of the terminal device according to an embodiment of this application. The terminal device 1100 may be specifically represented as a virtual reality VR device, a mobile phone, a tablet, a notebook computer, a smart wearable device, or the like. This is not limited herein. Specifically, the terminal device 1100 includes a receiver 1101, a transmitter 1102, a processor 1103, and a memory 1104 (where there may be one or more processors 1103 in the terminal device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. During specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1103, or may be implemented by the processor 1103. The processor 1103 may be an integrated circuit chip and has a signal processing capability. In an implementation process, steps in the foregoing methods can be implemented by using a hardware integrated logic circuit in the processor 1103, or by using instructions in a form of software. The processor 1103 may be a general-purpose processor, a digital signal processor (digital signal processor, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes steps related to the model training or model inference process in the method in combination with hardware of the processor.

The receiver 1101 may be configured to: receive input digit or character information, and generate a signal input related to related settings and function control of the execution device. The transmitter 1102 may be configured to output digit or character information through a first interface. The transmitter 1102 may be further configured to send instructions to a disk group through the first interface, to modify data in the disk group. The transmitter 1102 may further include a display device, for example, a display.

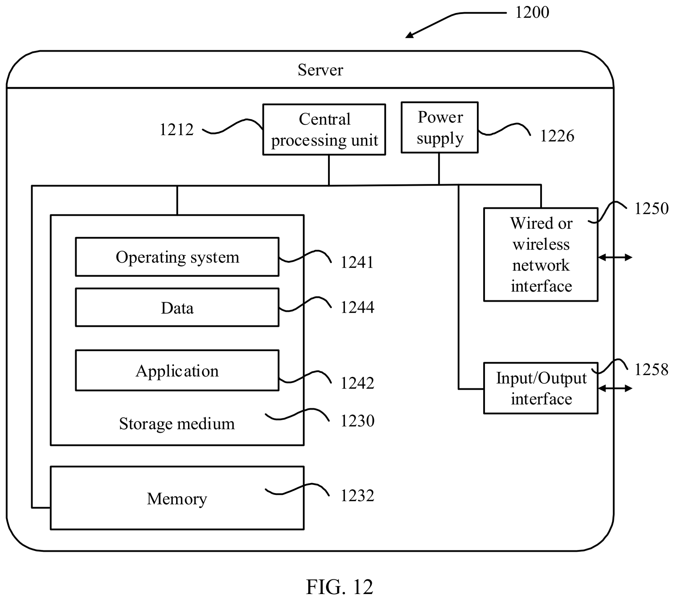

An embodiment of this application further provides a server. FIG. 12 is a diagram of a structure of the server according to an embodiment of this application. The server 1200 may vary greatly due to different configurations or performance, and may include one or more central processing units (central processing units, CPU) 1212 (for example, one or more processors) and a memory 1232, and one or more storage media 1230 (for example, one or more mass storage devices) that stores an application 1242 or data 1244. The memory 1232 and the storage medium 1230 may be transitory storage or persistent storage. A program stored in the storage medium 1230 may include one or more modules (not shown in the figure), and each module may include a series of instruction operations for the server. Further, the central processing unit 1212 may be configured to: communicate with the storage medium 1230, and perform, on the server 1200, the series of instruction operations in the storage medium 1230.

The server 1200 may further include one or more power supplies 1226, one or more wired or wireless network interfaces 1250, one or more input/output interfaces 1258; or one or more operating systems 1241, for example, Windows ServerTM, Mac OS XTM, UnixTM, LinuxTM, and FreeBSDTM.

In this embodiment of this application, the central processing unit 1212 is configured to perform an action related to model training or model inference in the foregoing embodiments.

An embodiment of this application further provides a computer program product. When the computer program product is run on a computer, the computer is enabled to perform steps performed by the execution device, or the computer is enabled to perform steps performed by the training device.

An embodiment of this application further provides a computer-readable storage medium. The computer-readable storage medium stores a program used for signal processing, and when the program is run on a computer, the computer is enabled to perform steps performed by the execution device; or the computer is enabled to perform steps performed by the training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in a training device performs the data processing method described in embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

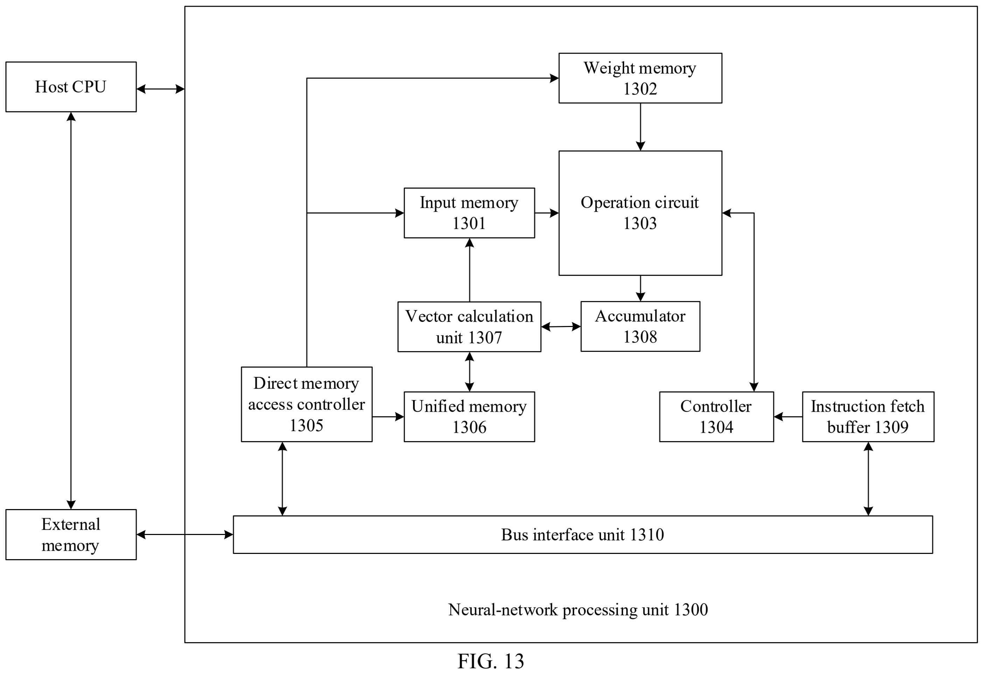

Specifically, FIG. 13 is a diagram of a structure of a chip according to an embodiment of this application. The chip may be represented as a neural-network processing unit NPU 1300. The NPU 1300 is mounted to a host CPU (Host CPU) as a coprocessor, and the host CPU allocates a task. A core part of the NPU is an operation circuit 1303. A controller 1304 controls the operation circuit 1303 to extract matrix data in a memory and perform a multiplication operation.

In some implementations, the operation circuit 1303 internally includes a plurality of process engines (Process Engines, PEs). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, it is assumed that there is an input matrix A, a weight matrix B, and an output matrix C. The operation circuit fetches, from a weight memory 1302, data corresponding to the matrix B, and caches the data on each PE in the operation circuit. The operation circuit fetches data of the matrix A from an input memory 1301, performs a matrix operation on the data and the matrix B, and stores an obtained partial result or final result of the matrix in an accumulator (accumulator) 1308.

A unified memory 1306 is configured to store input data and output data. Weight data is directly transferred to the weight memory 1302 by using a direct memory access controller (Direct Memory Access Controller, DMAC) 1305. The input data is also transferred to the unified memory 1306 by using the DMAC.

A BIU is a bus interface unit, namely, a bus interface unit 1310, and is configured to perform interaction between an AXI bus and the DMAC and between the AXI bus and an instruction fetch buffer (Instruction Fetch Buffer, IFB) 1309.

The bus interface unit (Bus Interface Unit, BIU for short) 1310 is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer input data to the input memory 1301.

A vector calculation unit 1307 includes a plurality of operation processing units. If required, further processing is performed on an output of the operation circuit 1303, for example, vector multiplication, vector addition, an exponential operation, a logarithmic operation, or a value comparison. The vector calculation unit 1307 is mainly configured to perform network calculation, such as batch normalization (batch normalization), pixel-level summation, and upsampling on a feature plane, at a non-convolutional/fully connected layer in a neural network.

In some implementations, the vector calculation unit 1307 can store a processed output vector in the unified memory 1306. For example, the vector calculation unit 1307 may apply a linear function or a non-linear function to the output of the operation circuit 1303, for example, perform linear interpolation on a feature plane extracted at a convolutional layer. For another example, the vector calculation unit 1307 may apply a linear function or a non-linear function to a vector of an accumulated value, to generate an activation value. In some implementations, the vector calculation unit 1307 generates a normalized value, a pixel-level summation value, or both a normalized value and a pixel-level summation value. In some implementations, the processed output vector can be used as an activation input to the operation circuit 1303, for example, used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiment provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program can be easily implemented by using corresponding hardware. In addition, specific hardware structures used to implement a same function may be various, for example, an analog circuit, a digital circuit, or a dedicated circuit. However, as for this application, a software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the method in embodiments of this application.

All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to the embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

**Claims**

1. A data processing method, comprising:

   obtaining a plurality of first images and random noise, wherein different first images are denoised images predicted by using a denoising module in the diffusion model at different historical steps; and
   fusing the plurality of first images and the random noise, to obtain a denoised image at a current step.

2. The method according to claim 1, further comprising:

   determining a first weight corresponding to each historical step, wherein each first weight is related to a value obtained by mapping the historical step using a target mapping method, and the target mapping method is used to determine a magnitude of randomness at each step; and
   fusing the plurality of first images and the random noise comprises:
   fusing the plurality of first images and the random noise based on a plurality of first weights.

3. The method according to claim 2, wherein each first weight is specifically obtained by performing a stochastic Adams method on the value obtained by mapping the historical step using the target mapping method.

4. The method according to any one of claims 1 to 3, further comprising:

   determining a second weight corresponding to the random noise, wherein the second weight is related to the value obtained by mapping the historical step using the target mapping method, and the target mapping method is used to determine the magnitude of randomness at each step; and
   fusing the plurality of first images and the random noise comprises:
   fusing the plurality of first images and the random noise based on the second weight.

5. The method according to any one of claims 1 to 4, wherein fusing the plurality of first images and the random noise comprises:
   fusing a denoised image obtained at a latest step, the plurality of first images, and the random noise.

6. The method according to claim 5, further comprising:

   determining a third weight corresponding to the denoised image obtained at the latest step, wherein the third weight is related to a value obtained by mapping the latest step using the target mapping method, and the target mapping method is used to determine the magnitude of randomness at each step; and
   fusing the denoised image obtained at the latest step, the plurality of first images, and the random noise comprises:
   fusing the denoised image obtained at the latest step, the plurality of first images, and the random noise based on the third weight.

7. The method according to any one of claims 2 to 6, wherein the target mapping method is a piecewise constant function.

8. The method according to any one of claims 1 to 7, wherein the random noise is Gaussian random noise.

9. The method according to any one of claims 1 to 8, wherein fusing the plurality of first images and the random noise, to obtain the denoised image at the current step comprises:

fusing the plurality of first images and the random noise, to obtain an initial value of the denoised image at the current step;

processing the initial value by using a denoising module in the diffusion model, to obtain a processing result; and fusing the processing result, the plurality of first images, and the random noise, to obtain the denoised image at the current step.

10. The method according to claim 9, further comprising:

determining a fourth weight corresponding to the processing result, wherein the fourth weight is related to a value obtained by mapping the current step using the target mapping method, and the target mapping method is used to determine the magnitude of randomness at each step; and

fusing the processing result, the plurality of first images, and the random noise comprises:

fusing the processing result, the plurality of first images, and the random noise based on the fourth weight.

11. A data processing apparatus, comprising:

an obtaining module, configured to obtain a plurality of first images and random noise, wherein different first images are denoised images predicted by using a denoising module in the diffusion model at different historical steps; and

a processing module, configured to fuse the plurality of first images and the random noise, to obtain a denoised image at a current step.

12. The apparatus according to claim 11, wherein the processing module is further configured to:

determine a first weight corresponding to each historical step, wherein each first weight is related to a value obtained by mapping the historical step using a target mapping method, and the target mapping method is used to determine a magnitude of randomness at each step; and

the processing module is specifically configured to:

fuse the plurality of first images and the random noise based on a plurality of first weights.

13. The apparatus according to claim 12, wherein each first weight is specifically obtained by performing a stochastic Adams method on the value obtained by mapping the historical step using the target mapping method.

14. The apparatus according to any one of claims 11 to 13, wherein the processing module is further configured to:

determine a second weight corresponding to the random noise, wherein the second weight is related to the value obtained by mapping the historical step using the target mapping method, and the target mapping method is used to determine the magnitude of randomness at each step; and

the processing module is specifically configured to:

fuse the plurality of first images and the random noise based on the second weight.

15. The apparatus according to any one of claims 11 to 14, wherein the processing module is specifically configured to: fuse a denoised image obtained at a latest step, the plurality of first images, and the random noise.

16. The apparatus according to claim 15, wherein the processing module is further configured to:

determine a third weight corresponding to the denoised image obtained at the latest step, wherein the third weight is related to a value obtained by mapping the latest step using the target mapping method, and the target mapping method is used to determine the magnitude of randomness at each step; and

the processing module is specifically configured to:

fuse the denoised image obtained at the latest step, the plurality of first images, and the random noise based on the third weight.

17. The apparatus according to any one of claims 12 to 16, wherein the target mapping method is a piecewise constant function.

18. The apparatus according to any one of claims 11 to 17, wherein the random noise is Gaussian random noise.

**19.** The apparatus according to any one of claims 11 to 18, wherein the processing module is specifically configured to:

fuse the plurality of first images and the random noise, to obtain an initial value of the denoised image at the current step;

process the initial value by using a denoising module in the diffusion model, to obtain a processing result; and

fuse the processing result, the plurality of first images, and the random noise, to obtain the denoised image at the current step.

**20.** The apparatus according to claim 19, wherein the processing module is further configured to:

determine a fourth weight corresponding to the processing result, wherein the fourth weight is related to a value obtained by mapping the current step using the target mapping method, and the target mapping method is used to determine the magnitude of randomness at each step; and

the processing module is specifically configured to:

fuse the processing result, the plurality of first images, and the random noise based on the fourth weight.

**21.** A computer storage medium, wherein the computer storage medium stores one or more instructions, and when the instructions are executed by one or more computers, the one or more computers are enabled to perform operations of the method according to any one of claims 1 to 10.

**22.** A computer program product, comprising computer-readable instructions, wherein when the computer-readable instructions are run on a computer device, the computer device is enabled to perform the method according to any one of claims 1 to 10.

**23.** A system, comprising at least one processor and at least one memory, wherein the processor and the memory are connected and communicate with each other through a communication bus;

the at least one memory is configured to store code; and

the at least one processor is configured to execute the code to perform the method according to any one of claims 1 to 10.

**24.** A chip, comprising a processor, wherein the processor is configured to support a data processing apparatus in implementing the method according to any one of claims 1 to 10.

Intelligent information chain

Smart product and industry application

Translation/Text analysis/... | Voice/Vision/Image/...

Data

Data processing: | Data training/Machine learning/Deep learning | Searching/Inference/Decision making | ...

Infrastructure | Sensor | Smart chip | Basic platform | ...

IT value chain

EP 4 742 146 A1

FIG. 1A

102

101

Parameter → Generative application → Processing result

103

FIG. 1B

Parameter →

← Processing result

Terminal 100          Server 200

FIG. 1C

Terminal 100

FIG. 1D

FIG. 2

FIG. 3

Cloud platform

Video understanding and processing service

**Cloud environment**

1. Enable a content audit service

2. Download an SDK

4. Service call

5. Service response

3. Environment configuration and SDK project import

Local development environment

Application

FIG. 4A

FIG. 4B

Processing result of the image

Fully connected layer 230

Output layer 240

Hidden layer n (23n)

Hidden layer 2 (232)

Hidden layer 1 (231)

Convolutional layer/Pooling layer 220

226

225

224

223

222

221

Convolutional neural network (CNN) 200

Input layer 210

To-be-processed image

FIG. 4C

Processing result of the image

Fully connected layer 230

Output layer 240

Hidden layer n (23n)

Hidden layer 2 (232)

Hidden layer 1 (231)

Convolutional layer/Pooling layer 220

| 226 | 226 |
| 225 | 225 |
| 224 | 224 |
| 223 | 223 |
| 222 | 222 |
| 221 | 221 |

Convolutional neural network (CNN) 200

Input layer 210

To-be-processed image

FIG. 4D

FIG. 4E

Obtain a plurality of first images and random noise, where different first images are denoised images predicted by using a denoising module in a diffusion model at different historical steps — 501

Fuse the plurality of first images and the random noise, to obtain a denoised image at a current step — 502

FIG. 5

FIG. 6

(a) Stable Diffusion      FIG. 7      (b) ControlNet

FIG. 8

EP 4 742 146 A1

FIG. 9A

FIG. 9B

FIG. 10

1100

Terminal device

| | |
|---|---|
| Receiver 1101 | Transmitter 1102 |

Antenna

Antenna

Processor 1103

| | |
|---|---|
| Application processor 11031 | Communication processor 11032 |

Memory 1104

FIG. 11

1200

Server

1212 — Central processing unit

Power supply — 1226

Wired or wireless network interface — 1250

Operating system — 1241

Data — 1244

Application — 1242

Storage medium — 1230

Input/Output interface — 1258

Memory — 1232

FIG. 12

EP 4 742 146 A1

Host CPU

Weight memory
1302

Input memory
1301

Operation circuit
1303

Vector calculation
unit 1307

Accumulator
1308

Direct memory
access controller
1305

Unified memory
1306

Controller
1304

Instruction fetch
buffer 1309

External
memory

Bus interface unit 1310

Neural-network processing unit 1300

FIG. 13

| INTERNATIONAL SEARCH REPORT | International application No. |
|---|---|
| | PCT/CN2024/107782 |

**A. CLASSIFICATION OF SUBJECT MATTER**

G06T 5/00(2024.01)i

According to International Patent Classification (IPC) or to both national classification and IPC

**B. FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 数据, 处理, 获取, 图像, 随机, 噪声, 扩散, 模型, 去噪, 模块, 不同, 历史, 步长, 预测, 融合, data, processing, obtain, image, random, noise, denoising, module, historical, step, length, fuse, different

**C. DOCUMENTS CONSIDERED TO BE RELEVANT**

| Category* | Citation of document, with indication, where appropriate, of the relevant passages | Relevant to claim No. |
|---|---|---|
| PX | CN 117173035 A (HUAWEI TECHNOLOGIES CO., LTD.) 05 December 2023 (2023-12-05) claims 1-24 | 1-24 |
| A | CN 116258651 A (HUAWEI TECHNOLOGIES CO., LTD.) 13 June 2023 (2023-06-13) description, paragraphs [0096]-[0336] | 1-24 |
| A | CN 110728357 A (SOUTHEAST UNIVERSITY) 24 January 2020 (2020-01-24) entire document | 1-24 |
| A | CN 114997233 A (BEIHANG UNIVERSITY) 02 September 2022 (2022-09-02) entire document | 1-24 |
| A | US 2021398252 A1 (HUAWEI TECHNOLOGIES CO., LTD.) 23 December 2021 (2021-12-23) entire document | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2024** | **18 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/107782**

| Patent document cited in search report | | | Publication date (day/month/year) | Patent family member(s) | | | Publication date (day/month/year) |
|---|---|---|---|---|---|---|---|
| CN | 117173035 | A | 05 December 2023 | None | | | |
| CN | 116258651 | A | 13 June 2023 | None | | | |
| CN | 110728357 | A | 24 January 2020 | None | | | |
| CN | 114997233 | A | 02 September 2022 | None | | | |
| US | 2021398252 | A1 | 23 December 2021 | US | 12062158 | B2 | 13 August 2024 |
| | | | | WO | 2020177607 | A1 | 10 September 2020 |
| | | | | EP | 3923233 | A1 | 15 December 2021 |
| | | | | EP | 3923233 | A4 | 13 April 2022 |

Form PCT/ISA/210 (patent family annex) (July 2022)

**REFERENCES CITED IN THE DESCRIPTION**

**Patent documents cited in the description**

- CN 202310950031